# EUROPEAN PATENT SPECIFICATION

(11) **EP 4 168 354 B1**
(45) Date of publication and mention of the grant of the patent: **22.04.2026**
(21) Application number: 21737266.3
(22) Date of filing: 09.06.2021
(51) Int. Cl.: C01B 3/36, C10K 3/00, C10K 3/04

(54) **FLEXIBLE METHOD OF PARTIAL OXIDATION**
FLEXIBLES VERFAHREN ZUR PARTIELLEN OXIDATION
PROCÉDÉ FLEXIBLE D'OXYDATION PARTIELLE

(30) Priority: 22.06.2020 US 202063042144 P
(43) Date of publication of application: 26.04.2023
(73) Proprietor: Praxair Technology, Inc., Danbury, CT 06810 (US)
(72) Inventor: BOOL, Lawrence, E., East Aurora, NY 14052 (US); DAMSTEDT, Bradley, D., Williamsville, NY 14221 (US); CHAKRAVARTI, Shrikar, Amherst, NY 14051 (US)
(74) Representative: Schwan Schorer & Partner mbB
(86) International application number: PCT/US2021/036560
(87) International publication number: WO 2021/262438

(56) References cited:
- WO-A1-99/55618
- US-A1- 2016 102 259
- US-B1- 6 641 625

## Description

### Field of the Invention

The present invention relates to production of hydrocarbon feedstock by methodology that utilizes partial oxidation ("POx") of hydrocarbon feed material.

### Background of the Invention

Plants for producing hydrocarbon products from hydrocarbon feed materials often operate within predetermined conditions that are based on an assumed set of characteristics including the characteristics of the feed material and on the desired characteristics of the product that is produced. However, when there is a change in the characteristics of the feed material (including inherent properties such as its composition, but also extrinsic properties such as its feed rate), the operator usually is forced to discontinue operations and/or to install costly substitute methodology to accommodate the change.

Methodology of this general type which can be vulnerable to this sort of disruption is described in U.S. Patent No. 9,624,440 and U.S. Published Patent Application No. US2016/0102259. Adaptation of this type of methodology is described in U.S. Patent No. 9,290,422, which discloses adding equipment such as an autothermal reactor ("ATR") to equipment already in place for the generation of liquid fuels from the source material. US 20161102259 A1, WO 99/55618 A1 and US 6 641 625 B1 disclose various other partial oxidation reformer processes.

The present invention adds flexibility and operational efficiency to the methodology of producing hydrocarbon feedstock useful in producing products such as fuels.

### Brief Summary of the Invention

A first aspect of the present invention is a method of producing hydrocarbon feedstock, comprising:
(A) feeding both (i) a raw feed from a source thereof, wherein the raw feed may optionally contain tars and comprises hydrogen and CO as well as one or more light hydrocarbons selected from the group consisting of methane, hydrocarbons containing 2 or 3 carbon atoms, and mixtures thereof, and (ii) an oxygen stream that has a temperature of 1093 °C to 2593 °C (2000 °F to 4700 °F), into a partial oxidation reactor and reacting the raw feed with the oxygen so that one or more of said light hydrocarbons in said raw feed is partially oxidized by said oxygen to increase the amounts of hydrogen and CO in the raw feed while converting tars if present in the raw feed to lower molecular weight products including hydrogen and CO, thereby producing a hydrocarbon feedstock having a molar ratio of hydrogen to CO at a first value;
(B) replacing the raw feed to the partial oxidation reactor with a modified feed that is fed to the partial oxidation reactor and which is formed by (i) lessening or discontinuing the amount of said raw feed from said source thereof that is fed into said partial oxidation reactor and (ii) feeding to said partial oxidation reactor a hydrocarbon feed stream that is not from said source of said raw feed and that has a composition different from the composition of said raw feed, and continuing to feed into said partial oxidation reactor an oxygen stream that has a temperature of 1093 °C to 2593 °C (2000 °F to 4700 °F), wherein reaction of said modified feed with the oxygen in the partial oxidation reactor under the conditions under which the raw feed is reacted with oxygen in step (A) produces a hydrocarbon feedstock in which the molar ratio of hydrogen to CO is at a second value different from said first value, and altering at least one condition of said oxygen stream that is fed to said partial oxidation reactor so that reaction thereof with said modified feed produces a hydrocarbon feedstock in which the molar ratio of hydrogen to CO is at a third value different from said second value; and then
(C) completely replacing the modified feed that is fed in step (B) with raw feed that is fed to said partial oxidation reactor all of which is from said source, while continuing to feed into said partial oxidation reactor an oxygen stream that has a temperature of 1093 °C to 2593 °C (2000 °F to 4700 °F), and altering at least one condition of said oxygen stream that is fed to said partial oxidation reactor relative to the conditions employed in step (B) so that reaction thereof with said raw feed produces a hydrocarbon feedstock in which the molar ratio of hydrogen to CO is different from said third value.

In a preferred embodiment of this aspect of the invention, in step (B), an amount of oxygen that had been used in production of the raw feed is fed instead to the partial oxidation reactor to increase the output of the partial oxidation reactor.

An embodiment of the foregoing method that utilizes WGS reaction is a method of producing hydrocarbon feedstock, comprising:
(A) feeding both (i) a raw feed from a source thereof, wherein the raw feed may optionally contain tars and comprises hydrogen and CO as well as one or more light hydrocarbons selected from the group consisting of methane, hydrocarbons containing 2 or 3 carbon atoms, and mixtures thereof, and (ii) an oxygen stream that has a temperature 1093 °C to 2593 °C (2000 °F to 4700 °F), into a partial oxidation reactor and reacting the raw feed with the oxygen so that one or more of said light hydrocarbons in said raw feed is partially oxidized by said oxygen to increase the amounts of hydrogen and CO in the raw feed while converting tars if present in the raw feed to lower molecular weight products including hydrogen and CO, and recovering from said partial oxidation reactor an intermediate feedstream;
(B) catalytically modifying the molar ratio of hydrogen to CO in the intermediate feedstream from step (A) to produce a hydrocarbon feedstock wherein the molar ratio of hydrogen to CO is at a first value;
(C) replacing the raw feed to the partial oxidation reactor with a modified feed that is fed to the partial oxidation reactor and which is formed by (i) lessening or discontinuing the amount of said raw feed from said source thereof that is fed into said partial oxidation reactor and (ii) feeding to said partial oxidation reactor a hydrocarbon feed stream that is not from said source of said raw feed and that has a composition different from the composition of said raw feed, and continuing to feed into said partial oxidation reactor an oxygen stream that has a temperature of 1093 °C to 2593 °C (2000 °F to 4700 °F), wherein reaction of said modified feed with the oxygen in the partial oxidation reactor under the conditions under which the raw feed is reacted with oxygen in step (A) followed by catalytic modification under the conditions employed in step (B) produce a hydrocarbon product in which the molar ratio of hydrogen to CO is at a second value, and altering at least one condition of said oxygen stream that is fed to said partial oxidation reactor so that reaction thereof with said modified feed followed by said catalytic modification produces a hydrocarbon feedstock in which the molar ratio of hydrogen to CO is at said second value; and then
(D) completely replacing the modified feed that is fed in step (C) with raw feed that is fed to said partial oxidation reactor all of which is from said source, while continuing to feed into said partial oxidation reactor an oxygen stream that has a temperature of 1093 °C to 2593 °C (2000 °F to 4700 °F), and altering at least one condition of said oxygen stream that is fed to said partial oxidation reactor relative to the conditions employed in step (C) so that reaction thereof with said raw feed followed by said catalytic modification produces a hydrocarbon feedstock in which the molar ratio of hydrogen to CO is different from said second value.

A second aspect of the present invention is a method of producing hydrocarbon feedstock, comprising:
(A) feeding both (i) a raw feed from a source thereof, wherein the raw feed may optionally contain tars and comprises hydrogen and CO as well as one or more light hydrocarbons selected from the group consisting of methane, hydrocarbons containing 2 or 3 carbon atoms, and mixtures thereof, and (ii) an oxygen stream that has a temperature of 1093 °C to 2593 °C (2000 °F to 4700 °F), into a partial oxidation reactor and reacting the raw feed with the oxygen so that one or more of said light hydrocarbons in said raw feed is partially oxidized by said oxygen to increase the amounts of hydrogen and CO in the raw feed while converting tars if present in the raw feed to lower molecular weight products including hydrogen and CO, and recovering from said partial oxidation reactor an intermediate feedstream wherein the molar ratio of hydrogen to CO is within a given range;
(B) producing steam by heating liquid water in indirect heat exchange with the intermediate feedstream produced in step (A);
(C) feeding steam produced in step (B) and carbonaceous feed material to a reactor to produce, by interaction of said steam with said carbonaceous feed material, second raw feed which may optionally contain tars and which comprises hydrogen and CO as well as one or more light hydrocarbons selected from the group consisting of methane, hydrocarbons containing 2 or 3 carbon atoms, and mixtures thereof; and
(D) replacing the raw feed that is fed in step (A) with said second raw feed that is fed to said partial oxidation reactor, while continuing to feed into said partial oxidation reactor an oxygen stream that has a temperature of 1093 °C to 2593 °C (2000 °F to 4700 °F), so that reaction thereof with said second raw feed produces a hydrocarbon feedstock in which the molar ratio of hydrogen to CO is in said given range.

### Brief Description of the Figures

Figure 1 is a flowsheet of a facility for producing hydrocarbon liquids such as fuels from feedstock such as biomass.
Figure 2 is a cross-sectional view of a device that can produce a stream of hot oxygen useful in this invention.
Figure 3 is a cross-sectional view of a portion of the flowsheet of Figure 1.

### Detailed Description of the Invention

The present invention is particularly useful in operations that convert hydrocarbon products such as biomass to useful hydrocarbon products such as (but not limited to) liquid fuel. The feedstock produced by the present invention includes products that can be sold and used as-is, as well as products that can be used as reactants to produce other finished useful products that can then be sold and used.

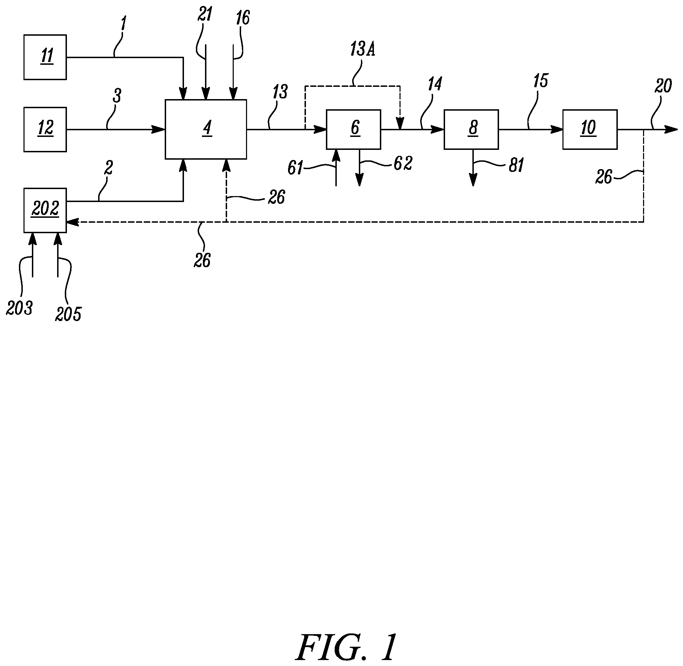

Figure 1 is a flowsheet that shows the typical steps of such an operation.

Referring to Figure 1, stream 1 which is also referred to herein as the raw feed is fed to partial oxidation reactor 4. Stream 1 is provided from source 11 which designates a production facility or reactor in which raw feed 1 is produced.

Examples of suitable raw feeds 1 and their sources 11 include:
Natural gas, from any commercial source thereof;
the gaseous stream that is produced by a gasification reactor, in which solid hydrocarbon material such as biomass or solid fuel such as coal or lignin is gasified in a stream of gas usually comprising air, steam, and/or oxygen at a high enough temperature that at least a portion of the solid material is converted to a gaseous raw stream 1;
product streams and byproduct streams, which more often are gaseous but may be liquid and/or solids, that are produced in a petrochemical refinery or chemical plant;
coke oven gas, being the offgas stream that is produced in a reactor that heat treats coal to produce coke;
pyrolysis gas, being a hydrocarbon-containing gaseous stream that is produced in a reactor to heat treat solid carbonaceous material such as fossil fuel or biomass to devolatilize and partially oxidize the solid material;
Other possible feed streams include oils, such as pyrolysis oils, and liquid hydrocarbons.

Raw feed 1 generally contains hydrogen and carbon monoxide (CO), and typically also contains one or more hydrocarbons such as alkanes and /or alkanols of 1 to 18 carbon atoms, and often contains one or more of carbon dioxide (CO2), and higher molecular weight hydrocarbons characterized as tars and/or soot.

The raw feed stream 1, if heated as it leaves source 11, typically exhibits a temperature of between about 260 °C and 871 °C (500 °F and 1600 °F).

Raw feed stream 1 is then fed into partial oxidation reactor 4 in which it is reacted (under conditions described more fully below) with oxygen that is provided as hot oxygen stream 2 (produced as more fully described below) to produce additional amounts of hydrogen and carbon monoxide (CO) from components present in stream 1. If tars are present in the stream, some or all of tars present can also be converted to lower molecular weight hydrocarbon products.

Oxidized product stream 13 which is produced in partial oxidation reactor 4 is fed to stage 6 in which stream 13 is preferably cooled and treated to remove substances that should not be present when the stream is fed to reactor 10 (described hereinbelow). Stage 6 typically includes a unit which cools stream 13, for instance by indirect heat exchange with incoming feed water 61 to produce stream 62 of heated water and/or steam. In alternative embodiments, stage 6 can also comprise a shift conversion reactor in which carbon monoxide in stream 13 is reacted (in a non-limiting example, with water vapor (steam)) in a catalytically mediated water-gas shift ("WGS") reaction to produce hydrogen, thereby providing a way to adjust the ratio of hydrogen to carbon monoxide in stream 13.

The resultant stream 14, having been cooled and/or having had its hydrogen:CO ratio adjusted in stage 6, is fed to stage 8 in which impurities 81 that may be present such as particulates, acid gases including CO₂, ammonia, sulfur species, and other inorganic substances such as alkali compounds, are removed. Impurities may be removed in one unit or in a series of units each intended to remove different ones of these impurities that are present or to reduce specific contaminants to the desired low levels. Stage 8 represents the impurities removal whether achieved by one unit or by more than one unit. Cooling and impurities removal are preferably performed in any effective sequence in a series of stages or all in one unit. Details are not shown but will be familiar to those skilled in the art. Stage 8 typically includes operations for final removal of impurities, non-limiting examples of which include particulates, NH₃, sulfur species and CO₂. The CO₂ removal is typically performed by a solvent-based process, which either uses a physical solvent, e.g. methanol, or a chemical solvent, e.g. amine.

The resulting cooled, conditioned gaseous stream 15 is then fed to stage 10 which represents any beneficial use of one or more components present in stream 15. That is, stream 15 can be used as-is as an end product. However, the present invention is particularly useful when stream 15 is to serve as feedstock for further reaction and/or other processing that produces product designated as 20 in Figure 1.

One preferred example of such further processing is conversion of stream 15 into liquid fuels, such as using stream 15 as feedstock to a Fischer-Tropsch process or other synthetic methodology to produce a liquid hydrocarbon or a mixture of liquid hydrocarbons useful as fuel.

Other examples of useful treatment of stream 15 include the production of specific targeted chemical compounds such as methanol, ethanol, straight-chain or branched-chain or cyclic alkanes and alkanols containing 4 to 18 carbon atoms, aromatics, and mixtures thereof; or in the production of longer-chain products such as polymers.

The overall composition of stream 15 can vary widely depending on the composition of raw feed 1, on intermediate processing steps, and on operating conditions. Stream 15 typically contains (on a dry basis) 20 to 50 vol.% of hydrogen, and 10 to 45 vol.% of carbon monoxide.

However, it is preferred that one or more properties of stream 15 will continually exhibit a value, or a value that falls within a characteristic desired range, in order to accommodate the treatment that stream 15 is to undergo in stage 10 to produce a repeatable, reliable supply of product 20.

In a preferred practice of the present invention, the property of stream 15 that is relevant and that should be maintained within a desired ratio, is the molar ratio of hydrogen (H2) to CO. For FT fuels production, the target range of H2:CO molar ratio depends on the product being produced. For example, methanol production is most efficient with H2:CO within the range of 1.95 to 2.05. Synthetic gasoline production requires a H2:CO ratio in the range of 0.55 to 0.65. For fuels production by other conversion mechanisms, such as biological conversion, the target range of H2:CO molar ratio can be very large. According to the Wood-Ljungdahl pathway, depending on the type of bacteria being used, streams containing only CO, only H2 or any combination of H2:CO can be utilized due to the bacteria's ability to convert H2O and CO2 into H2 and CO as needed. Each bacterial strain will prefer a particular chemical makeup of syngas at which it is most efficient in producing the desired product.

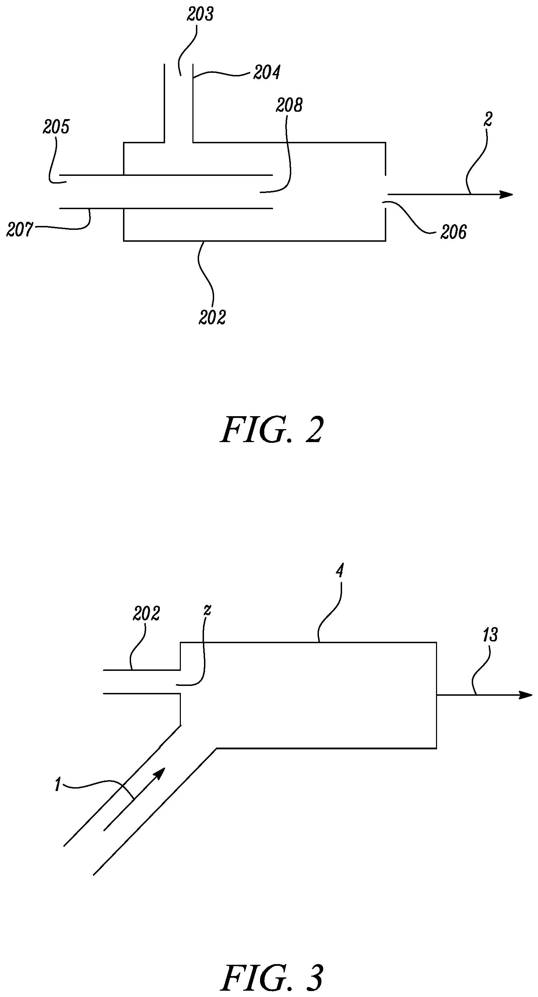

Referring again to Figure 1, processing in stage 10 may produce byproduct stream 26, which can be recycled to partial oxidation reactor 4 to be used as a reactant, and/or recycled to hot oxygen generator 202 (described below with respect to Figure 2) to be combusted in hot oxygen generator 202 as described herein. Steam (stream 62) formed from water stream 61 in stage 6 can be optionally fed to partial oxidation reactor 4.

Referring to Figures 1-3, hot oxygen stream 2 is fed to partial oxidation reactor 4 to provide oxygen for the desired partial oxidation of raw feed 1, and to provide enhanced mixing, accelerated oxidation kinetics, and accelerated kinetics of the reforming with reactor 4.

There are many ways in which the desired high temperature, high velocity oxygen-containing stream can be provided, such as plasma heating.

One preferred way is illustrated in Figure 2, namely hot oxygen generator 202, that can provide hot oxygen stream 2 at a high velocity. Stream 203 of gaseous oxidant having an oxygen concentration of at least 30 volume percent and preferably at least 85 volume percent is fed into hot oxygen generator 202 which is preferably a chamber or duct having an inlet 204 for the oxidant 203 and having an outlet nozzle 206 for the stream 2 of hot oxygen. Most preferably the oxidant 203 is technically pure oxygen having an oxygen concentration of at least 99.5 volume percent. The oxidant 203 fed to the hot oxygen generator 202 has an initial velocity which is generally within the range of from 15.2 to 91.4 m/s (50 to 300 feet per second (fps)) and typically will be less than 61.0 m/s (200 fps)

Stream 205 of fuel is provided into the hot oxygen generator 202 through a suitable fuel conduit 207 ending with nozzle 208 which may be any suitable nozzle generally used for fuel injection. The fuel may be any suitable combustible fluid examples of which include natural gas, methane, propane, hydrogen and coke oven gas, or may be a process stream such as stream 26 obtained from stage 10. Preferably the fuel 205 is a gaseous fuel. Liquid fuels such as number 2 fuel oil or byproduct stream 23 may also be used.

The fuel in stream 205 and the oxidant stream 203 should be fed into generator 202 at rates relative to each other such that the amount of oxygen in oxidant stream 203 constitutes a sufficient amount of oxygen for the intended use of the hot oxygen stream. The fuel 205 provided into the hot oxygen generator 202 combusts therein with oxygen from oxidant stream 203 to produce heat and combustion reaction products which may also include carbon monoxide.

The combustion within generator 202 generally raises the temperature of remaining oxygen within generator 202 by at least about 260 °C, and preferably by at least about 538 °C (500 °F, and preferably by at least about 1000 °F). The hot oxygen obtained in this way is passed from the hot oxygen generator 202 as stream 2 into partial oxidation reactor 4 through and out of a suitable opening or nozzle 206 as a high velocity hot oxygen stream having a temperature of at least 2000°F up to 4700°F. Generally the velocity of the hot oxygen stream 2 as it passes out of nozzle 206 will be within the range of from 152.4 to 1371.6 m/s (500 to 4500 feet per second (fps)), and will typically exceed the velocity of stream 203 by at least 91.4 m/s (300 fps) The momentums of the hot oxygen stream and of the feed, should be sufficiently high to achieve desired levels of mixing of the oxygen and the feed. The momentum flux ratio of the hot oxygen stream to the feedstock stream should be at least 3.0.

The composition of the hot oxygen stream depends on the conditions under which the stream is generated, but preferably it contains at least 50 vol.% O₂ and more preferably at least 65 vol.% O₂. The formation of the high velocity hot oxygen stream can be carried out in accordance with the description in U.S. Patent No. 5,266,024.

It will be recognized that the desired state of systems that employ partial oxidation in the course of producing hydrocarbon feedstock is that there is little or no perturbation of the characteristics of the raw feed 1, of the oxygen stream 2, or of streams 13, 14 and 15, nor of the operating conditions employed in the partial oxidation reactor 4 and in stages 6 and 8.

However, circumstances may arise occasionally in which characteristics of raw feed 1 to the POx reactor change in a way such that, if nothing else changes in the operating conditions, the characteristics of stream 15 would be changed in a manner that would adversely affect the characteristics of the desired product stream 20. Such a change in stream 20 is, of course, undesirable.

Examples of such circumstances include:
The source 11 of raw feed 1 is unavailable; for example, it is shut down to perform periodic scheduled maintenance, or to perform repairs that become necessary because of unscheduled breakdowns or other reasons.
The amount of raw feed 1 received from source 11 is reduced because of repairs or other operational difficulties in source 11, or because the amount of feed to source 11 has been reduced.
The composition of raw feed 1 has changed because the feed to source 11 has changed.
The raw feed 1 from its source 11 has become too expensive relative to other compositions, from other sources, that could be useful feed material to the POx reactor 4.
The treatment provided in one or more of the stages 6 and 8 has changed, such as changes to the catalytic processing that is provided in the WGS reaction.

In the past, customary practice to accommodate changes in circumstances such as these, which involve changes to characteristic of the raw feed 1 to POx reactor 4, has often been shutting down the overall facility, or at best running the facility at a partial load which is detrimental to capital recovery. When that occurs, an operator who has more than one such facility must then rely on the output of product that is available from other facilities, or else suffer the loss of production.

It has been found however that the present invention enables the operator to maintain production, in the same facility, of product stream 15 unchanged in the compositional characteristics that matter (such as the H2:CO molar ratio) and flow rate, by using to advantage the operational flexibility that is available from the aforementioned hot oxygen generator.

That is, when the flow to partial oxidation reactor 4 of raw feed stream 1 from what had been its source 11 is discontinued or is lessened, to any level less than 100% to greater than 0% of what had been the flow rate, then alternate hydrocarbon stream 3 is fed to partial oxidation reactor 4. The feed rate of alternate hydrocarbon stream 3 is preferably at a rate that supplies a sufficient amount of the aggregate input of carbon to POx reactor 4 that is being replaced from the lessened or discontinued stream 1, preferably enough to provide at least the same aggregate input of carbon.

The alternate hydrocarbon feed stream 3 can have been produced from source 12 by which is meant one single source which is not source 11, or more than one single source none of which is source 11.

Suitable alternate hydrocarbon feed streams 3 and their source(s) 12 can be one, or more, of any of the following:
Natural gas, from any commercial source thereof;
the gaseous stream that is produced by a gasification reactor, in which solid hydrocarbon material such as biomass or solid fuel such as coal or lignin is gasified in a stream of gas usually comprising air, steam, and/or oxygen at a high enough temperature that at least a portion of the solid material is converted to a gaseous raw stream;
product streams and byproduct streams, which more often are gaseous but may be liquid and/or solids, that are produced in a petrochemical refinery or chemical plant;
coke oven gas, being the offgas stream that is produced in a reactor that heat treats coal to produce coke;
pyrolysis gas, being a hydrocarbon-containing gaseous stream that is produced in a reactor to heat treat solid carbonaceous material such as fossil fuel or biomass to devolatilize and partially oxidize the solid material;
Other "alternate" feed streams include hydrocarbon oils and liquid hydrocarbons:
   The alternate stream 12 may comprise gaseous and/or liquid, saturated and/or unsaturated and/or cyclic, hydrocarbons containing 1 to 10 carbon atoms and optionally containing one or more oxygen atoms, and mixtures of any such hydrocarbons. Examples include but are not limited to natural gas, propane, and liquid fuels. The overall composition of stream 11 will typically be different from that of raw stream 1.

The alternate hydrocarbon feed stream 12, which may include some raw feed 1 still being fed from source 11, is partially oxidized in partial oxidation reactor 4 described herein. Partial oxidation is carried out using hot oxygen stream 2 that is generated in hot oxygen generator 202 that is described herein. However, the "conditions" of hot oxygen stream 2 that is fed to POx reactor 4 under these circumstances, have to be adjusted relative to the "conditions" of the hot oxygen stream 2 and of its feeding to POx reactor 4 that were employed when the feed was entirely raw feed 1 before any change has to be accommodated.

By "conditions" of the hot oxygen stream 2 is meant any one or more of:
the physical properties of the hot oxygen stream 2, including its temperature, oxygen content, its feed rate into POx reactor 4, and velocity at which it is fed into POx reactor 4, as well as conditions under which the hot oxygen stream 2 is combined and reacted with alternate hydrocarbon feed stream 3, including stoichiometric ratio

The hot oxygen generator 202 is flexible with respect to the characteristics (such as the temperature, the composition, and the feed rate) of the feedstock it can handle, and because the hot oxygen generator 202 can be used to produce syngas directly, no physical changes need to be made to the hot oxygen generator 202 to accommodate to changes in any characteristic(s) of the feed to the partial oxidation reactor 4. Changes to the "conditions" of the hot oxygen generator operation are implemented to maintain appropriate operating conditions in the partial oxidation reactor 4 using the alternate fuel to produce stream 13 having characteristics that make stream 13 amenable to further treatment to product stream 15 having characteristics that have not changed relative to the characteristics before the inclusion of stream 3.

Thus, in the event that raw feed 1 is to be modified or the availability of raw feed 1 from source 11 is to be cut back or shut down, the operator does not have to completely stop production of the overall plant but can continue production of stream 15 that continues to maintain its desired characteristics of composition and otherwise as desired, by adjusting the conditions of operation of the hot oxygen generator system together, if desired, with adjustment of the downstream syngas conditioning and conversion stages.

It can be added that in embodiments in which source 11 employs oxygen in the formation of raw feed stream 1, such as when source 11 is a gasification reactor, but operation of the source 11 is cut back or shut down, then an amount of oxygen equal to the amount that would have been fed to the gasification reactor can be fed instead (as stream 21 in Figure 1) to the partial oxidation reactor 4 to maintain or increase the output of the partial oxidation reactor 4.

Thus, whereas adjustments to the conditions of the hot oxygen stream 2 can accommodate the changed characteristics of the alternate hydrocarbon feed stream 3 from the raw feed 1 for which the overall plant is designed, it can also be useful to accommodate the changed characteristics by adjusting other operations downstream from the partial oxidation reactor 4, such as in the water gas shift reactor that is used to maintain in stream 15 the H2:CO molar ratio in a range that is appropriate for the product 20 being produced in stage 10.

That is, if the WGS reactor is designed to condition the gas in stream 13 to a H2:CO molar ratio of 2.0:1 in stream 14, the WGS reactor will have been designed anticipating a particular composition or range of compositions of the syngas in stream 13, such as H2:CO molar ratios ranging from 0.8:1 to 1.1:1. Then, when alternate hydrocarbon stream 3 (such as natural gas) is fed instead of (or in addition to) raw feed 1, to the partial oxidation reactor 4, the partial oxidation reactor 4 may (if nothing else is changed) produce a stream 13 having a different composition, potentially with H2:CO molar ratios ranging from 1.6-1.8. Adjustments can be made to the WGS operation to accommodate the change in the composition of stream 13 together with accommodations in the partial oxidation reactor.

Also, as mentioned above, a change in the characteristics of the catalyst in the WGS stage could adversely affect the composition of stream 15, resulting again in a change to the overall feed to the POx reactor 4 plus appropriate change to the conditions of the hot oxygen stream 2.

Providing steam or CO2 rich gases to the partial oxidation reactor 4 can shift the H2:CO ratio higher or lower respectively. One variation may require the injection of steam or a CO2 rich stream into the POx reactor to adjust the H2:CO ratio. Addition of steam shifts some CO to CO2 while producing additional H2 from the added steam. Addition of CO2 shifts some H2 to H2O, while producing additional CO from the CO2. This addition is required if the water gas shift reactor does not have the ability to adjust the H2:CO ratio of the syngas produced using the alternate method because it is so far removed from the expected H2:CO ratio from the biomass derived syngas. For most applications, this will not be required because utilizing an alternate feedstock like natural gas or propane will result in a H2:CO ratio already within the desired range, such as at or near the typically desired ratio of 2.0:1. In some cases, a portion of the gas stream 13 is sent to the WGS reactor, which produces a gas with a H2:CO ratio much higher than 2.0:1. This gas is mixed with un-shifted gas stream 13A, resulting in a mixture with a H2:CO ratio of 2.0:1. If the gas stream 13 starts with an H2:CO ratio closer to 2.0:1 than the ratio designed for, less gas is required to be treated by the WGS reactor to get to 2.0:1.

Subsequently, when the amount and composition of raw feed 1 from source 11 becomes fully available again, the flow of alternate hydrocarbon stream 3 can be discontinued, and the full flow of raw feed 1 is resumed as had been in operation before raw feed 1 became lessened or discontinued. This again changes the characteristics of the feed stream to partial oxidation reactor 4, and so the "conditions" of the hot oxygen stream 2 relative to the characteristics of the again-altered raw feed 1 are adjusted so that the product stream 13 has the desired characteristics. This will usually involve restoring the conditions to what they were before the feed of raw feed 1 was first altered or discontinued. Also, the conditioning operations that may be carried out in steps 6 and 8 are adjusted in order to provide that the stream 15 has the desired properties and composition suitable to be fed to stage 10.

This first aspect of the present invention provides several advantages.

One advantage is that there is no need for an additional unit to provide feed to POx reactor 4, to accommodate cutbacks, shutdowns, or other changes to raw feed 1. The hot oxygen generator is already present in the overall plant, being used with the partial oxidation reactor. Because the hot oxygen generator is flexible to what feedstock is being processed, it can be utilized in the same plant to produce gas from the alternate feed stream 3. Providing this alternative way to generate gas stream 15 decouples POx reactor 4 and the stages 6 and 8 downstream from POx reactor 4, and their related equipment, from reliance on one particular source 11 of feed to the POx reactor. Utilizing the hot oxygen generator 202 provides the plant with the ability to produce stream 15 and product 20 more fully.

This advantage in turn enables a plant that is designed to produce a product having a desired set of characteristics (such as a plant to produce renewable / biomass derived liquid fuels) to continually produce product at rates near or above the nameplate capacity of the plant. This lets the operator avoid the alternative of producing nothing, decreasing the plant uptime, and decreasing potential plant revenue.

### EXAMPLES

These examples assume a biomass derived syngas is being processed in a partial oxidation (POx) reactor that is fired by a hot oxygen generator as described herein, under the conditions given in Table. This syngas is representative of biomass derived feedstocks and is not specific to any particular configuration. Tars and inert substances such as Ar and N2 are not included, for modeling simplicity. The hot oxygen generator is firing using pure O2 and natural gas, with the properties as shown in Table. The partial oxidation reactor pressure is assumed to be 50 psig.

**Table 1: Feedstock, NG and O2 properties used for the examples.**

| (To convert values from °F to °C, subtract 32 and then multiply by 5/9.) | | | | | |
|---|---|---|---|---|---|
| | | Design Feedstock | NG | Propane | O2 |
| Temperature | °F | 1000 | 70 | 70 | 70 |
| H2 | vol% | 25.0% | | | |
| H2O | vol% | 25.0% | | | |
| CO | vol% | 15.0% | | | |
| CO2 | vol% | 15.0% | 2.0% | | |
| CH4 | vol% | 15.0% | 95.0% | | |
| C2H4 | vol% | 2.5% | | | |
| C2H6 | vol% | 2.5% | 3.0% | | |
| C3H8 | vol% | | | 100% | |
| O2 | vol% | | | | 100% |

### Example 1:

### Full replacement of raw syngas produced by gasification of biomass feed stock, with alternate hydrocarbon feed stream

### 5 scenarios are given:

1. Design - Operation as planned using the biomass derived syngas feedstock and O2 provided from the hot oxygen generator
2. Natural gas as the alternate feed - Replacing the biomass derived syngas with natural gas while maintaining design O2 feed rate
3. Natural gas as the alternate feed + 20% additional O2 - Replacing the biomass derived syngas with natural gas and increasing the O2 feed rate to the partial oxidation reactor (from the hot oxygen generator) by 20%
4. Natural gas + CO2 as the alternate feed - Replacing the biomass derived syngas with mixture of natural gas and CO2 to adjust the H2:CO ratio while maintaining design O2 feed rate
5. Propane as Feed - Replacing the biomass derived syngas with propane while maintaining design O2 feed rate

Scenarios 2 and 5 show how the performance of the hot oxygen generator system whose operational parameters are designed for partial oxidation of biomass derived syngas changes when applied to different feedstocks. This would correspond to an embodiment in which the flow of the raw syngas stream from the gasification reactor is completely discontinued and natural gas or propane is fed instead to the POx reactor as alternate hydrocarbon feed. Scenarios 2 and 3 show how additional O2 available to the POx reactor (appearing as stream 21 in Figure 1) compare to the design case. Scenarios 2 and 4 show how addition of CO2 (appearing as stream 16 in Figure 1) can adjust the H2:CO ratio.

Results from these simulations are given in Table. Scenarios 2 and 5 show a 17% and 13% decrease in H2+CO respectively. While a reduction in H2+CO is not ideal, maintaining production at any level above zero is a large improvement and preferable to stopping production of the downstream product. Scenario 3 shows that increasing the O2 rate to the POx reactor, potentially made possible by freeing up O2 being used by the gasifier, can restore production of H2+CO to design levels. Increasing the O2 rate further makes it possible to surpass the design production of H2+CO.

H2:CO molar ratios of 1.7 and 1.3 for scenarios 2 and 5 are also different from the value of 1.2 for the intended design in this example. H2:CO ratios are typically shifted (referring to the water gas shift (WGS) reaction) depending on the product being produced downstream. For example, methanol production may require an H2:CO ratio near 2.0, while synthetic gasoline may require a ratio near 0.6. A typical plant configuration is to split the syngas stream after the POx reactor, sending some to a WGS reactor and allowing some to bypass the reactor (represented as 13A in Figure 1). The amount of shift in the reactor takes the H2:CO ratio of that portion of the syngas beyond what is necessary so that the desired H2:CO ratio is achieved when the two streams are blended together again. Referring to scenario 2, if the plant requires a H2:CO ratio of 2.0, starting with an H2:CO ratio of 1.7 is desirable because it reduces the amount of shift required, allowing the plant to either decrease the amount of syngas required to pass through the shift reactor and extend catalyst lifetime or to increase production by using the same size of WGS reactor to process more total syngas.

However, if the plant requires a H2:CO ratio of 0.6, increasing the H2:CO ratio from 1.2 to 1.7 may be unacceptable. Scenario 5 shows that a different alternate hydrocarbon stream can be used to produce a H2:CO ratio similar to the design syngas. Scenario 4 shows that adjustments to the H2:CO ratio can also be made by adding CO2 to the natural gas being fed to the POx reactor. Adding CO2 causes the H2:CO ratio to decrease; adding enough CO2 can restore the H2:CO ratio to design values. Similarly, the H2:CO ratio can be increased, if desired, by adding H2O to the feed stream to the POx reactor.

The hot oxygen generator is able to easily handle all these operating scenarios without interruption, requiring no hardware or control changes.

**Table 2: Predictions for full replacement scenarios**

| (To convert values from °F to °C, subtract 32 and then multiply by 5/9; to convert from lbmol/hr to mol/s, multiply by 0.126.) | | | | | | |
|---|---|---|---|---|---|---|
| Scenario | | 1-Design | 2-NG as Feed | 3-NG as Feed + 20% addl O2 | 4-NG + 25% CO2 as Feed | 5-Propane as Feed |
| Feedstock Input | Ibmol/hr | 1000 | 288 | 346 | 366 | 119 |
| HOB O2 | Ibmol/hr | 229 | 229 | 275 | 229 | 229 |
| HOB Fuel (NG) | Ibmol/hr | 38 | 38 | 46 | 38 | 38 |
| Syngas Output | Ibmol/hr | 1581 | 975 | 1168 | 1016 | 943 |
| | °F | 2536 | 2582 | 2591 | 2731 | 2685 |
| H2+CO | Ibmol/hr | 1002 | 829 | 990 | 764 | 873 |
| H2+CO / Feed | | 1.0 | 2.9 | 2.9 | 2.1 | 7.3 |
| H2:CO | | 1.2 | 1.7 | 1.7 | 1.2 | 1.3 |
| O2 / Feed | | 0.23 | 0.79 | 0.79 | 0.63 | 1.92 |
| residence time | sec | 2.0 | 3.2 | 2.7 | 3.3 | 2.8 |

### Example 2:

### Partial replacement of raw syngas produced by gasification of biomass feed stock, with alternate hydrocarbon feed stream

Example 2 illustrates operation in which the gasification reactor is still providing syngas to the partial oxidation reactor, but at a reduced flow rate relative to full operation. Utilization of the hot oxygen generator with the POx system enables the operator to maintain the syngas production to design rates, or to increase syngas production, by allowing an alternate hydrocarbon feed stream to be fed to the POx reactor in addition to the reduced syngas.

Table gives results comparing the design condition to cases where syngas at 50% rate is supplemented with increasing flow rates of natural gas utilized as the alternate hydrocarbon feed. Increasing the natural gas flow rate requires increasing the amounts of O2 fed to the POx reactor, and results in increasing amounts of H2+CO being produced. If the O2 feed rate to the POx reactor is maintained at the design level, the H2+CO rate exiting the POx reactor is only slightly lower than design. If additional amounts of O2 are fed to the POx reactor, which are available due to lower O2 usage in the gasification reactor, production of fuels can be increased beyond design levels. It is also practicable to feed alternate hydrocarbon feed to the POx reactor even if the syngas flow rate to the POx reactor is at design rates, if additional production of fuels is desired. This may be limited by the amount of O2 available to the plant or the sizing of downstream equipment such as the WGS reactor, other syngas conditioning equipment (syngas cooler, CO2 removal, other polishing reactors) or the conversion step itself.

As in Example 1, the H2:CO molar ratios for the partial replacement scenarios are different than the design. These differences can be handled in a manner similar to that explained above.

**Table 3: Predictions for partial replacement scenarios.**

| (To convert values from °F to °C, subtract 32 and then multiply by 5/9; to convert from lbmol/hr to mol/s, multiply by 0.126.) | | | | | | |
|---|---|---|---|---|---|---|
| | | Design | 50% syngas + various rates of NG | | | |
| Feedstock Input | Ibmol/hr | 1000 | 625 | 665 | 700 | 800 |
| HOB O2 | Ibmol/hr | 229 | 201 | 229 | 253 | 322 |
| HOB Fuel (NG) | Ibmol/hr | 38 | 33 | 38 | 42 | 54 |
| Syngas Output | Ibmol/hr | 1581 | 1202 | 1332 | 1446 | 1770 |
| | °F | 2536 | 2565 | 2560 | 2558 | 2555 |
| H2+CO | Ibmol/hr | 1002 | 868 | 984 | 1084 | 1371 |
| H2+CO / Feed | | 1.0 | 1.4 | 1.5 | 1.5 | 1.7 |
| H2:CO | | 1.2 | 1.3 | 1.4 | 1.4 | 1.5 |
| O2 / Feed | | 0.23 | 0.32 | 0.34 | 0.36 | 0.40 |
| residence time | sec | 2.0 | 3.2 | 2.7 | 3.3 | 2.8 |

### Providing Steam in Commissioning (Startup) or Restarting of Feed Source to POX Reactor

Another embodiment in which the advantages of the present invention can be utilized arises in plants designed so that source 11 which provides raw feed 1 to the POx reactor utilizes steam in the production of the raw feed 1. This embodiment can be employed when such a plant is first coming on line, or in situations in which a source 11 that employs steam is utilized to provide raw feed 1 to the POx reactor 4, and then the source is shut down, and is then restarted again to resume providing raw feed 1 to POx reactor 4.

These aspects of the invention utilize the feature that the POx system is so feedstock flexible that a separate auxiliary steam boiler is not necessary, or if used may only be reduced in size, to provide steam for use in starting up (or restarting) a reactor that employs steam in the generation or production of raw feed for the POx reactor. One example of such a reactor is a gasification reactor. In conventional practice up to now, a startup boiler is required to provide steam to a gasification reactor during startup. Utilizing the hot oxygen generator with the POx reactor in the present invention, as described herein, enables production of steam from water-based cooling (in stage 6 in Figure 1). The steam can then be used to start up the gasification reactor. During plant commissioning, bringing the solid feedstock fed gasifier online and operational is one of the major time-consuming steps.

With this invention, the system described herein including the hot oxygen generator could be used with an alternate feedstock to reduce commissioning time by providing feed from a source other than the source that employs steam in its operation, either at full or partial load, to the downstream equipment, allowing the other equipment to be commissioned independently from the gasifier.

These features and advantages are illustrated in the following Example 3.

### Example 3

The use of the hot oxygen generator with the POx reactor can reduce commissioning time. An integrated plant such as is described herein for producing hydrocarbon feedstock is likely to have several unit operations downstream of the stage that generates raw feed 1. As shown herein, such stages may include compression, WGS, impurities removal, and conversion. In the startup of the overall plant, these unit operations must be commissioned using gas that is typical of what will be used in full operations. If a gasification reactor or other reactor that employs steam as a reagent or gas-producing agent is to be used as the source of raw feed 1 which will be treated and converted in the plant, the commissioning of the plant as a whole will be delayed if the steam-employing reactor has any operational issues. As another benefit, as described herein, the hot oxygen generator system can be used to provide a reliable alternate feed 3 for use in commissioning the equipment that is downstream of the reactor.

For example, a fully commissioned biomass gasifier is likely to be completely functional no greater than 85% of the time. The reliability of this type of gasifier will obviously be much lower and result in an unreliable source of gas for use in commissioning of the POx reactor 4 and the equipment downstream of reactor 4. The scenarios given in Example 1 show that the hot oxygen generator system can be used to provide a gas stream with properties similar to that which the plant is designed to produce, allowing the balance of the plant to be commissioned with a reliable source of gas that is fed to the POx reactor.

There are several ways in which the hot oxygen generator can be implemented to take advantage of this capability.

One embodiment is to inject steam or a CO2 rich stream into the POx reactor to adjust the H2:CO ratio of the stream that is produced in the POx reactor. Addition of steam shifts some CO to CO2 while producing additional H2 from the added steam. Addition of CO2 shifts some H2 to H2O, while producing additional CO from the CO2. This addition is required if the water gas shift reactor does not have the ability to adjust the H2:CO ratio of the syngas produced using the alternate method because it is so far removed from the expected H2:CO ratio from the biomass derived syngas. For most applications, this will not be required because utilizing an alternate feedstock like natural gas or propane will result in a H2:CO ratio closer to the typically desired molar ratio of 2.0:1. Usually, only a portion of the syngas is sent to the WGS reactor, which produces a gas with a H2:CO molar ratio much higher than 2.0:1. This gas is mixed with un-shifted syngas (represented as bypass stream 13A in Figure 1), resulting in a mixture with a H2:CO molar ratio of 2.0:1. If the syngas starts with an H2:CO molar ratio closer to 2.0:1 than the design syngas, less syngas is required to be treated by the WGS reactor to get to a molar ratio of 2.0:1.

## Claims

1. A method of producing hydrocarbon feedstock, comprising:
(A) feeding both (i) a raw feed (1) from a source (11) thereof, wherein the raw feed (1) may optionally contain tars and comprises hydrogen and CO as well as one or more light hydrocarbons selected from the group consisting of methane, hydrocarbons containing 2 or 3 carbon atoms, and mixtures thereof, and (ii) an oxygen stream (2) that has a temperature of 1093 °C to 2593 °C (2000 F to 4700 F), into a partial oxidation reactor (4) and reacting the raw feed (1) with the oxygen (2) so that one or more of said light hydrocarbons in said raw feed is partially oxidized by said oxygen to increase the amounts of hydrogen and CO in the raw feed while converting tars if present in the raw feed to lower molecular weight products including hydrogen and CO, thereby producing a hydrocarbon feedstock having a molar ratio of hydrogen to CO at a first value;
(B) replacing the raw feed (1) to the partial oxidation reactor (4) with a modified feed (3) that is fed to the partial oxidation reactor (4) and which is formed by (i) lessening or discontinuing the amount of said raw feed (1) from said source (11) thereof that is fed into said partial oxidation reactor (4) and (ii) feeding to said partial oxidation reactor (4) a hydrocarbon feed stream (3) that is not from said source (11) of said raw feed (1) and that has a composition different from the composition of said raw feed (1), and continuing to feed into said partial oxidation reactor an oxygen stream (2) that has a temperature of 1093 °C to 2593 °C (2000 F to 4700 F), wherein reaction of said modified feed (3) with the oxygen (2) in the partial oxidation reactor (4) under the conditions under which the raw feed (1) is reacted with oxygen in step (A) produces a hydrocarbon feedstock in which the molar ratio of hydrogen to CO is at a second value different from said first value, and altering at least one condition of said oxygen stream (2) that is fed to said partial oxidation reactor (4) so that reaction thereof with said modified feed produces a hydrocarbon feedstock in which the molar ratio of hydrogen to CO is at a third value different from said second value; and then
(C) completely replacing the modified feed (3) that is fed in step (B) with raw feed (1) that is fed to said partial oxidation reactor all of which is from said source (11), while continuing to feed into said partial oxidation reactor (4) an oxygen stream (2) that has a temperature of 1093 °C to 2593 °C (2000 F to 4700 F), and altering at least one condition of said oxygen stream that is fed to said partial oxidation reactor (4) relative to the conditions employed in step (B) so that reaction thereof with said raw feed produces a hydrocarbon feedstock in which the molar ratio of hydrogen to CO is different from said third value.

2. method of producing hydrocarbon feedstock, comprising:
(A) feeding both (i) a raw feed (1) from a source (11) thereof, wherein the raw feed (1) may optionally contain tars and comprises hydrogen and CO as well as one or more light hydrocarbons selected from the group consisting of methane, hydrocarbons containing 2 or 3 carbon atoms, and mixtures thereof, and (ii) an oxygen stream (2) that has a temperature of 1093 °C to 2593 °C (2000 F to 4700 F), into a partial oxidation reactor (4) and reacting the raw feed with the oxygen so that one or more of said light hydrocarbons in said raw feed is partially oxidized by said oxygen to increase the amounts of hydrogen and CO in the raw feed while converting tars if present in the raw feed to lower molecular weight products including hydrogen and CO, and recovering from said partial oxidation reactor (4) an intermediate feedstream (13);
(B) catalytically modifying the molar ratio of hydrogen to CO in the intermediate feedstream (13) from step (A) to produce a hydrocarbon feedstock (14) wherein the molar ratio of hydrogen to CO is at a first value;
(C) replacing the raw feed (1) to the partial oxidation reactor (4) with a modified feed (3) that is fed to the partial oxidation reactor (4) and which is formed by (i) lessening or discontinuing the amount of said raw feed (1) from said source (11) thereof that is fed into said partial oxidation reactor (4) and (ii) feeding to said partial oxidation reactor (4) a hydrocarbon feed stream (3) that is not from said source (11)of said raw feed (1) and that has a composition different from the composition of said raw feed (1), and continuing to feed into said partial oxidation reactor (4) an oxygen stream (2) that has a temperature of 1093 °C to 2593 °C (2000 F to 4700 F), wherein reaction of said modified feed with the oxygen in the partial oxidation reactor (4) under the conditions under which the raw feed (1) is reacted with oxygen in step (A) followed by catalytic modification under the conditions employed in step (B) produce a hydrocarbon product in which the molar ratio of hydrogen to CO is at a second value, and altering at least one condition of said oxygen stream that is fed to said partial oxidation reactor (4) so that reaction thereof with said modified feed followed by said catalytic modification produces a hydrocarbon feedstock in which the molar ratio of hydrogen to CO is at said second value; and then
(D) completely replacing the modified feed (3) that is fed in step (C) with raw feed (1) that is fed to said partial oxidation reactor (4) all of which is from said source (11), while continuing to feed into said partial oxidation reactor (4) an oxygen stream (2) that has a temperature of 1093 °C to 2593 °C (2000 F to 4700 F), and altering at least one condition of said oxygen stream (2) that is fed to said partial oxidation reactor (4) relative to the conditions employed in step (C) so that reaction thereof with said raw feed followed by said catalytic modification produces a hydrocarbon feedstock in which the molar ratio of hydrogen to CO is different from said second value.

3. A method of producing hydrocarbon feedstock, comprising:
(A) feeding both (i) a raw feed (1) from a source (11) thereof, wherein the raw feed may optionally contain tars and comprises hydrogen and CO as well as one or more light hydrocarbons selected from the group consisting of methane, hydrocarbons containing 2 or 3 carbon atoms, and mixtures thereof, and (ii) an oxygen stream that has a temperature of 1093 °C to 2593 °C (2000 F to 4700 F), into a partial oxidation reactor (4) and reacting the raw feed with the oxygen so that one or more of said light hydrocarbons in said raw feed is partially oxidized by said oxygen to increase the amounts of hydrogen and CO in the raw feed while converting tars if present in the raw feed to lower molecular weight products including hydrogen and CO, and recovering from said partial oxidation reactor (4) an intermediate feedstream (13) wherein the molar ratio of hydrogen to CO is within a given range;
(B) producing steam by heating liquid water (61) in indirect heat exchange with the intermediate feedstream (13) produced in step (A);
(C) feeding steam ( 62) produced in step (B) and carbonaceous feed material to a reactor to produce, by interaction of said steam with said carbonaceous feed material, second raw feed (3) which may optionally contain tars and which comprises hydrogen and CO as well as one or more light hydrocarbons selected from the group consisting of methane, hydrocarbons containing 2 or 3 carbon atoms, and mixtures thereof; and
(D) replacing the raw feed (1) that is fed in step (A) with said second raw feed (3) that is fed to said partial oxidation reactor (4), while continuing to feed into said partial oxidation reactor an oxygen stream (2) that has a temperature of 1093 °C to 2593 °C (2000 F to 4700 F) so that reaction thereof with said second raw feed produces a hydrocarbon feedstock in which the molar ratio of hydrogen to CO is in said given range.

## Patentansprüche

1. Verfahren zum Herstellen von Kohlenwasserstoff-Ausgangsmaterial, umfassend:
(A) Zuführen sowohl (i) eines Rohzustroms (1) aus einer Quelle (11) dafür, wobei der Rohzustrom (1) gegebenenfalls Teere enthalten kann und Wasserstoff und CO sowie einen oder mehrere leichte Kohlenwasserstoffe umfasst, ausgewählt aus der Gruppe, bestehend aus Methan, Kohlenwasserstoffen mit 2 oder 3 Kohlenstoffatomen und Mischungen davon, als auch (ii) eines Sauerstoffstroms (2), der eine Temperatur von 1093 °C bis 2593 °C (2000 °F bis 4700 °F) aufweist, in einen Partialoxidationsreaktor (4) und Umsetzen des Rohzustroms (1) mit dem Sauerstoff (2), so dass einer oder mehrere der leichten Kohlenwasserstoffe in dem Rohzustrom durch den Sauerstoff partiell oxidiert werden, um die Mengen an Wasserstoff und CO in dem Rohzustrom zu erhöhen, während Teere, falls im Rohzustrom vorhanden, zu Produkten mit niedrigerem Molekulargewicht einschließlich Wasserstoff und CO umgewandelt werden, wodurch ein Kohlenwasserstoff-Ausgangsmaterial hergestellt wird, welches ein Molverhältnis von Wasserstoff zu CO mit einem ersten Wert aufweist;
(B) Ersetzen der Rohzustroms (1) zu dem Partialoxidationsreaktor (4) durch einen modifizierten Zustrom (3), der dem Partialoxidationsreaktor (4) zugeführt wird und der gebildet wird durch (i) Verringern der Menge oder Unterbrechen des Rohzustroms (1) aus der Quelle (11) dafür, der in den Partialoxidationsreaktor (4) zugeführt wird, und (ii) Zuführen eines Kohlenwasserstoff-Zustroms (3), der nicht aus der Quelle (11) des Rohzustroms (1) stammt und der eine Zusammensetzung aufweist, die sich von der Zusammensetzung des Rohzustroms (1) unterscheidet, zu dem Partialoxidationsreaktor (4) und Fortsetzen der Zufuhr eines Sauerstoffstroms (2), der eine Temperatur von 1093 °C bis 2593 °C (2000 °F bis 4700 °F) aufweist, in den Partialoxidationsreaktor, wobei durch eine Reaktion des modifizierten Zustroms (3) mit dem Sauerstoff (2) in dem Partialoxidationsreaktor (4) unter den Bedingungen, unter denen der Rohzustrom (1) im Schritt (A) mit Sauerstoff umgesetzt wird, ein Kohlenwasserstoff-Ausgangsmaterial hergestellt wird, in dem das Molverhältnis von Wasserstoff zu CO bei einem zweiten Wert liegt, der sich von dem ersten Wert unterscheidet, und Ändern mindestens einer Bedingung des Sauerstoffstroms (2), der dem Partialoxidationsreaktor (4) zugeführt wird, so dass durch eine Reaktion dieses mit dem modifizierten Zustrom ein Kohlenwasserstoff-Ausgangsmaterial hergestellt wird, in dem das Molverhältnis von Wasserstoff zu CO bei einem dritten Wert liegt, der sich von dem zweiten Wert unterscheidet; und sodann
(C) vollständiges Ersetzen des modifizierten Zustroms (3), der im Schritt (B) zugeführt wird, durch einen Rohzustrom (1), der dem Partialoxidationsreaktor zugeführt wird, wobei dieser vollständig aus der Quelle (11) stammt, während dem Partialoxidationsreaktor (4) weiterhin ein Sauerstoffstrom (2) zugeführt wird, der eine Temperatur von 1093 °C bis 2593 °C (2000 °F bis 4700 °F) aufweist, und Ändern mindestens einer Bedingung des Sauerstoffstroms, der dem Partialoxidationsreaktor (4) zugeführt wird, gegenüber den Bedingungen, die im Schritt (B) eingesetzt werden, so dass durch eine Reaktion dieses mit dem Rohzustrom ein Kohlenwasserstoff-Ausgangsmaterial hergestellt wird, in dem sich das Molverhältnis von Wasserstoff zu CO von dem dritten Wert unterscheidet.

2. Verfahren zur Herstellung von Kohlenwasserstoff-Ausgangsmaterial, umfassend:
(A) Zuführen sowohl (i) eines Rohzustroms (1) aus einer Quelle (11) dafür, wobei der Rohzustrom (1) gegebenenfalls Teere enthalten kann und Wasserstoff und CO sowie einen oder mehrere leichte Kohlenwasserstoffe umfasst, ausgewählt aus der Gruppe, bestehend aus Methan, Kohlenwasserstoffen mit 2 oder 3 Kohlenstoffatomen und Mischungen davon, als auch (ii) eines Sauerstoffstroms (2), der eine Temperatur von 1093 °C bis 2593 °C (2000 °F bis 4700 °F) aufweist, in einen Partialoxidationsreaktor (4) und Umsetzen des Rohzustroms mit dem Sauerstoff, so dass einer oder mehrere der leichten Kohlenwasserstoffe in dem Rohzustrom durch den Sauerstoff partiell oxidiert werden, um die Mengen an Wasserstoff und CO in dem Rohzustrom zu erhöhen, während Teere, falls im Rohzustrom vorhanden, zu Produkten mit niedrigerem Molekulargewicht einschließlich Wasserstoff und CO umgewandelt werden, und Zurückgewinnen eines Zwischenzustroms (13) aus dem Partialoxidationsreaktor (4);
(B) katalytisches Modifizieren des Molverhältnisses von Wasserstoff zu CO in dem Zwischenzustrom (13) aus dem Schritt (A), um ein Kohlenwasserstoff-Ausgangsmaterial (14) herzustellen, wobei das Molverhältnis von Wasserstoff zu CO bei einem ersten Wert liegt;
(C) Ersetzen des Rohzustroms (1) zu dem Partialoxidationsreaktor (4) durch einen modifizierte Zustrom (3), der dem Partialoxidationsreaktor (4) zugeführt wird und der gebildet wird durch (i) Verringern der Menge oder Unterbrechen des Rohzustroms (1) aus der Quelle (11) dafür, der in den Partialoxidationsreaktor (4) zugeführt wird, und (ii) Zuführen eines Kohlenwasserstoff-Zustroms (3), der nicht aus der Quelle (11) des Rohzustroms (1) stammt und der eine Zusammensetzung aufweist, die sich von der Zusammensetzung des Rohzustroms (1) unterscheidet, zu dem Partialoxidationsreaktor (4) und Fortsetzen der Zufuhr eines Sauerstoffstroms (2), der eine Temperatur von 1093 °C bis 2593 °C (2000 °F bis 4700 °F) aufweist, in den Partialoxidationsreaktor (4), wobei durch eine Reaktion des modifizierten Zustroms mit dem Sauerstoff in dem Partialoxidationsreaktor (4) unter den Bedingungen, unter denen der Rohzustrom (1) im Schritt (A) mit Sauerstoff umgesetzt wird, gefolgt von einer katalytischen Modifikation unter den im Schritt (B) eingesetzten Bedingungen, ein Kohlenwasserstoffprodukt hergestellt wird, in dem das Molverhältnis von Wasserstoff zu CO bei einem zweiten Wert liegt, und Ändern mindestens einer Bedingung des Sauerstoffstroms, der dem Partialoxidationsreaktor (4) zugeführt wird, so dass durch eine Reaktion dieses mit dem modifizierten Zustrom, gefolgt von der katalytischen Modifikation, ein Kohlenwasserstoff-Ausgangsmaterial hergestellt wird, in dem das Molverhältnis von Wasserstoff zu CO bei dem zweiten Wert liegt; und sodann
(D) vollständiges Ersetzen des modifizierten Zustroms (3), der im Schritt (C) zugeführt wird, durch einen Rohzustrom (1), der dem Partialoxidationsreaktor (4) zugeführt wird, wobei dieser vollständig aus der Quelle (11) stammt, während dem Partialoxidationsreaktor (4) weiterhin ein Sauerstoffstrom (2) zugeführt wird, der eine Temperatur von 1093 °C bis 2593 °C (2000 °F bis 4700 °F) aufweist, und Ändern mindestens einer Bedingung des Sauerstoffstroms (2), der dem Partialoxidationsreaktor (4) zugeführt wird, gegenüber den Bedingungen, die im Schritt (C) eingesetzt werden, so dass durch eine Reaktion dieses mit dem Rohzustrom, gefolgt von der katalytischen Modifikation, ein Kohlenwasserstoff-Ausgangsmaterial hergestellt wird, in dem sich das Molverhältnis von Wasserstoff zu CO von dem zweiten Wert unterscheidet.

3. Verfahren zum Herstellen von Kohlenwasserstoff-Ausgangsmaterial, umfassend:
(A) Zuführen sowohl (i) eines Rohzustroms (1) aus einer Quelle (11) dafür, wobei der Rohzustrom gegebenenfalls Teere enthalten kann und Wasserstoff und CO sowie einen oder mehrere leichte Kohlenwasserstoffe umfasst, ausgewählt aus der Gruppe, bestehend aus Methan, Kohlenwasserstoffen mit 2 oder 3 Kohlenstoffatomen und Mischungen davon, als auch (ii) eines Sauerstoffstroms, der eine Temperatur von 1093 °C bis 2593 °C (2000 °F bis 4700 °F) aufweist, in einen Partialoxidationsreaktor (4) und Umsetzen des Rohzustroms mit dem Sauerstoff, so dass einer oder mehrere der leichten Kohlenwasserstoffe in dem Rohzustrom durch den Sauerstoff partiell oxidiert werden, um die Mengen an Wasserstoff und CO in dem Rohzustrom zu erhöhen, während Teere, falls im Rohzustrom vorhanden, zu Produkten mit niedrigerem Molekulargewicht einschließlich Wasserstoff und CO umgewandelt werden, und Zurückgewinnen eines Zwischenzustroms (13) aus dem Partialoxidationsreaktor (4), wobei das Molverhältnis von Wasserstoff zu CO innerhalb eines gegebenen Bereichs liegt;
(B) Herstellen von Dampf durch Erhitzen von flüssigem Wasser (61) in indirektem Wärmeaustausch mit dem in Schritt (A) hergestellten Zwischenzustrom (13);
(C) Zuführen von im Schritt (B) hergestelltem Dampf (62) und kohlenstoffhaltigem Ausgangsmaterial zu einem Reaktor, um durch Wechselwirkung des Dampfes mit dem kohlenstoffhaltigen Ausgangsmaterial einen zweiten Rohzustrom (3) zu erzeugen, welcher gegebenenfalls Teere enthalten kann und welcher Wasserstoff und CO sowie einen oder mehrere leichte Kohlenwasserstoffe umfasst, ausgewählt aus der Gruppe, bestehend aus Methan, Kohlenwasserstoffen mit 2 oder 3 Kohlenstoffatomen und Mischungen davon; und
(D) Ersetzen des Rohzustroms (1), der im Schritt (A) zugeführt wird, durch den zweiten Rohzustrom (3), der dem Partialoxidationsreaktor (4) zugeführt wird, während weiterhin ein Sauerstoffstrom (2) mit einer Temperatur von 1093 °C bis 2593 °C (2000 °F bis 4700 °F) in den Partialoxidationsreaktor geführt wird, so dass eine Reaktion dieses mit dem zweiten Rohzustrom ein Kohlenwasserstoff-Ausgangsmaterial erzeugt, in dem das Molverhältnis von Wasserstoff zu CO in dem gegebenen Bereich liegt.

## Revendications

1. Procédé de production d'une matière première d'hydrocarbures, comprenant :
(A) l'introduction à la fois (i) d'une charge brute (1) provenant d'une source (11) de celle-ci, dans lequel la charge brute (1) peut éventuellement contenir des goudrons et comprend de l'hydrogène et du CO ainsi qu'un ou plusieurs hydrocarbures légers choisis dans le groupe constitué par le méthane, les hydrocarbures contenant 2 ou 3 atomes de carbone, et des mélanges de ceux-ci, et (ii) d'un flux d'oxygène (2) qui a une température de 1 093 °C à 2 593 °C (2 000 F à 4 700 F), dans un réacteur d'oxydation partielle (4) et la réaction de la charge brute (1) avec l'oxygène (2) de sorte qu'un ou plusieurs desdits hydrocarbures légers dans ladite charge brute soient partiellement oxydés par ledit oxygène pour augmenter les quantités d'hydrogène et de CO dans la charge brute tout en convertissant les goudrons s'ils sont présents dans la charge brute en produits de poids moléculaire inférieur comportant de l'hydrogène et du CO, produisant ainsi une matière première d'hydrocarbures ayant un rapport molaire entre l'hydrogène et le CO à une première valeur ;
(B) le remplacement de la charge brute (1) vers le réacteur d'oxydation partielle (4) par une charge modifiée (3) qui est introduite dans le réacteur d'oxydation partielle (4) et qui est formée (i) en réduisant ou interrompant la quantité de ladite charge brute (1) provenant de ladite source (11) de celle-ci, qui est introduite dans ledit réacteur d'oxydation partielle (4), et (ii) en introduisant dans ledit réacteur d'oxydation partielle (4) un flux d'alimentation d'hydrocarbures (3) qui ne provient pas de ladite source (11) de ladite charge brute (1) et qui a une composition différente de la composition dudit charge brute (1), et la poursuite de l'introduction dans ledit réacteur d'oxydation partielle d'un flux d'oxygène (2) qui a une température de 1 093 °C à 2 593 °C (2 000 F à 4 700 F), dans lequel la réaction de ladite charge modifiée (3) avec l'oxygène (2) dans le réacteur d'oxydation partielle (4) dans les conditions dans lesquelles la charge brute (1) est mise en réaction avec l'oxygène à l'étape (A) produit une matière première d'hydrocarbures dans laquelle le rapport molaire entre l'hydrogène et le CO est à une deuxième valeur différente de ladite première valeur, et la modification d'au moins une condition dudit flux d'oxygène (2) qui est introduit dans ledit réacteur d'oxydation partielle (4) de telle sorte que la réaction de celui-ci avec ladite charge modifiée produise une matière première d'hydrocarbures dans laquelle le rapport molaire de l'hydrogène au CO est à une troisième valeur différente de ladite deuxième valeur ; puis
(C) le remplacement complet de la charge modifiée (3) qui est introduite à l'étape (B) par une charge brute (1) qui est introduite dans ledit réacteur d'oxydation partielle dont la totalité provient de ladite source (11), tout en continuant à introduire dans ledit réacteur d'oxydation partielle (4) un flux d'oxygène (2) qui a une température de 1 093 °C à 2 593 °C (2 000 F à 4 700 F), et la modification d'au moins une condition dudit flux d'oxygène qui est introduit dans ledit réacteur d'oxydation partielle (4) par rapport aux conditions employées à l'étape (B) de sorte que la réaction de celui-ci avec ladite charge brute produise une matière première d'hydrocarbures dans laquelle le rapport molaire entre l'hydrogène et le CO est différent de ladite troisième valeur.

2. Procédé de production d'une matière première d'hydrocarbures, comprenant :
(A) l'introduction à la fois (i) d'une charge brute (1) provenant d'une source (11) de celle-ci, dans lequel la charge brute (1) peut éventuellement contenir des goudrons et comprend de l'hydrogène et du CO ainsi qu'un ou plusieurs hydrocarbures légers choisis dans le groupe constitué par le méthane, les hydrocarbures contenant 2 ou 3 atomes de carbone, et des mélanges de ceux-ci, et (ii) d'un flux d'oxygène (2) qui a une température de 1 093 °C à 2 593 °C (2 000 F à 4 700 F), dans un réacteur d'oxydation partielle (4) et la réaction de la charge brute avec l'oxygène de sorte qu'un ou plusieurs desdits hydrocarbures légers dans ladite charge brute soient partiellement oxydés par ledit oxygène pour augmenter les quantités d'hydrogène et de CO dans la charge brute tout en convertissant les goudrons s'ils sont présents dans la charge brute en produits de masse moléculaire inférieure comportant de l'hydrogène et du CO, et la récupération à partir dudit réacteur d'oxydation partielle (4) d'un flux d'alimentation intermédiaire (13) ;
(B) la modification par voie catalytique du rapport molaire de l'hydrogène au CO dans le flux d'alimentation intermédiaire (13) issu de l'étape (A) pour produire une matière première d'hydrocarbures (14), dans lequel le rapport molaire de l'hydrogène au CO est à une première valeur ;
(C) le remplacement de la charge brute (1) vers le réacteur d'oxydation partielle (4) par une charge modifiée (3) qui est introduite dans le réacteur d'oxydation partielle (4) et qui est formée (i) en réduisant ou interrompant la quantité de ladite charge brute (1) provenant de ladite source (11) de celle-ci, qui est introduite dans ledit réacteur d'oxydation partielle (4), et (ii) en introduisant dans ledit réacteur d'oxydation partielle (4) un flux d'alimentation d'hydrocarbures (3) qui ne provient pas de ladite source (11) de ladite charge brute (1) et qui a une composition différente de la composition de ladite charge brute (1), et la poursuite de l'introduction dans ledit réacteur d'oxydation partielle (4) d'un flux d'oxygène (2) qui a une température de 1 093 °C à 2 593 °C (2 000 F à 4 700 F), dans lequel la réaction de ladite charge modifiée avec l'oxygène dans le réacteur d'oxydation partielle (4) dans les conditions dans lesquelles la charge brute (1) est mise en réaction avec l'oxygène à l'étape (A), suivie d'une modification catalytique dans les conditions utilisées à l'étape (B), produisent un produit hydrocarboné dans lequel le rapport molaire de l'hydrogène au CO est à une deuxième valeur, et la modification d'au moins une condition dudit flux d'oxygène qui est introduit dans ledit réacteur d'oxydation partielle (4) de sorte que la réaction de celui-ci avec ladite charge modifiée suivie de ladite modification catalytique produise une matière première d'hydrocarbures dans laquelle le rapport molaire de l'hydrogène au CO est à ladite deuxième valeur ; puis
(D) le remplacement complet de la charge modifiée (3) qui est introduite à l'étape (C) par une charge brute (1) qui est introduite dans ledit réacteur d'oxydation partielle (4) dont la totalité provient de ladite source (11), tout en continuant à introduire dans ledit réacteur d'oxydation partielle (4) un flux d'oxygène (2) qui a une température de 1 093 °C à 2 593 °C (2 000 F à 4 700 F), et la modification d'au moins une condition dudit flux d'oxygène (2) qui est introduit dans ledit réacteur d'oxydation partielle (4) par rapport aux conditions employées à l'étape (C) de sorte que la réaction de celui-ci avec ladite charge brute suivie de ladite modification catalytique produise une matière première d'hydrocarbures dans laquelle le rapport molaire de l'hydrogène au CO est différent de ladite deuxième valeur.

3. Procédé de production d'une matière première d'hydrocarbures, comprenant :
(A) l'introduction à la fois (i) d'une charge brute (1) provenant d'une source (11) de celle-ci, dans lequel la charge brute peut éventuellement contenir des goudrons et comprend de l'hydrogène et du CO ainsi qu'un ou plusieurs hydrocarbures légers choisis dans le groupe constitué par le méthane, les hydrocarbures contenant 2 ou 3 atomes de carbone, et des mélanges de ceux-ci, et (ii) d'un flux d'oxygène qui a une température de 1 093 °C à 2 593 °C (2 000 F à 4 700 F), dans un réacteur d'oxydation partielle (4) et la réaction de la charge brute avec l'oxygène de sorte qu'un ou plusieurs desdits hydrocarbures légers dans ladite charge brute soient partiellement oxydés par ledit oxygène pour augmenter les quantités d'hydrogène et de CO dans la charge brute tout en convertissant les goudrons s'ils sont présents dans la charge brute en produits de masse moléculaire inférieure comportant de l'hydrogène et du CO, et la récupération à partir dudit réacteur d'oxydation partielle (4) d'un flux d'alimentation intermédiaire (13), dans lequel le rapport molaire de l'hydrogène au CO est dans une plage donnée ;
(B) la production de la vapeur en chauffant de l'eau liquide (61) par échange de chaleur indirect avec le flux d'alimentation intermédiaire (13) produit à l'étape (A) ;
(C) l'introduction de la vapeur (62) produite à l'étape (B) et d'une matière d'alimentation carbonée dans un réacteur pour produire, par interaction de ladite vapeur avec ladite matière d'alimentation carbonée, une seconde charge brute (3) qui peut éventuellement contenir des goudrons et qui comprend de l'hydrogène et du CO ainsi qu'un ou plusieurs hydrocarbures légers choisis dans le groupe constitué par le méthane, les hydrocarbures contenant 2 ou 3 atomes de carbone, et des mélanges de ceux-ci ; et
(D) le remplacement de la charge brute (1) qui est introduite à l'étape (A) par ladite seconde charge brute (3) qui est introduite dans ledit réacteur d'oxydation partielle (4), tout en continuant à introduire dans ledit réacteur d'oxydation partielle un flux d'oxygène (2) qui a une température de 1 093 °C à 2 593 °C (2 000 F à 4 700 F) de sorte que la réaction de celui-ci avec ladite seconde charge brute produise une matière première d'hydrocarbures dans laquelle le rapport molaire de l'hydrogène au CO est dans ladite plage donnée.
